# EUROPEAN PATENT APPLICATION

(11) **EP 2 050 371 A1**
(43) Date of publication of application: **22.04.2009**
(21) Application number: 08166644.8
(22) Date of filing: 15.10.2008
(51) Int. Cl.: A47J 31/44

(54) **Improved coffee machine body and method for manufacturing the same**

(30) Priority: 19.10.2007 IT TO20070742
(71) Applicant: RANCILIO MACCHINE PER CAFFE' S.p.A., I-20010 Villastanza di Parabiago (Milano) (IT)
(72) Inventor: CARBONINI, CARLO, 20010, VILLASTANZA DI PARABIAGO (MILANO) (IT)
(74) Representative: Robba, Pierpaolo

(57) **Abstract**

The present invention refers to a body of a coffee machine (10) having at least one boiler (14) arranged to keep a liquid at much higher temperature than ambient temperature. The body (15) comprises a set of panels (15a, 15b ... 15n) arranged to impart a determined shape to the machine (10), wherein at least one panel (15a, 15b ... 15n) includes an inner surface (51), made of a first material having a first coefficient of thermal conductivity, and an outer surface (55), which is made of a second material having a second coefficient of thermal conductivity whose value is lower than or equal to the value of the first coefficient of thermal conductivity, and which is secured to said inner surface (51) externally thereof. The invention, which refers also to a method of manufacturing the body, enables improving the thermal insulation of the machine, optimising the thermal performance thereof and improving the resistance thereof to shocks.

## Description

### Technical field

The present invention generally relates to a coffee machine body and to a method of manufacturing a coffee machine body.

More particularly, the present invention relates to an improved coffee machine body. State of the art

Coffee machines for preparing coffee infusions, such as for instance espresso coffee, by using hot water and coffee powder are well known.

Such machines generally include, in addition to other components, a frame, for instance of steel or iron, a boiler secured inside the frame and a body secured to the frame and arranged to impart a given shape to the machine.

The body is made, for instance, of panels of aluminium, steel, brass or even plastics, such as ABS (acrylonitrile-butadiene-styrene), polycarbonate, polyamide.

It is also known that the boilers, which are made for instance of copper or copper alloys, stainless steel or, seldom, plastics, are generally configured to keep the water necessary for preparing coffee at temperatures in the range 120 to 140 °C, and are at least partly lagged with materials having insulating characteristics, i.e. materials with low thermal conductivity.

A first technical problem of the prior art is that the boiler, being kept by heating elements and control and adjusting devices at temperatures surely higher than those of the outside environment, exchanges heat with the surrounding environment, that is the inside of the machine, and hence it transfers a high amount of energy, in the form of thermal energy, to the air contained inside the coffee machine. Said air in turn exchanges heat with the body panels enclosing the machine. Such panels, being made of materials with high thermal conductivity, exchange a high amount of heat with the outside environment, thereby strongly reducing the thermal efficiency of the coffee machine.

Actually, there is a series of heat exchange passages (and hence of energy transfers) that can be summarised as follows:
- boiler → air inside the machine;
- air inside the machine → machine body;
- machine body → outside environment; and that result in a waste of energy and hence in high operation costs of the coffee machine in order to keep the boiler temperature at the desired values.

A second technical problem, related with the first one, is that not always the boiler can be lagged with a material having insulating characteristics or insulating material.

Actually, a lagging of insulating material for the boiler generally cannot be applied when using, as a power source, a gas burner in place of electrical devices such as electrical resistors, since the gas burner generates a free flame that licks the outside surface of the boiler and that, by conduction, transfers energy to the water inside the boiler, in order to maintain the water temperature of 120 to 140 °C in the boiler.

Thus, in case of an application for gas boilers, an insulating material around the boiler cannot be used, since the thermally insulating material would prevent transmission of thermal energy to the boiler inside. It is further to be appreciated that most insulating materials generally do not stand a prolonged exposition to a free flame.

A third technical problem, indirectly related with the other ones, is that the prior art body panels are made of materials that can be easily damaged by shocks. Indeed, the prior art panels are made of painted sheet steel or brass, or of aluminium castings, also painted. The paint work, which, as known, imparts aesthetical properties and properties of protection against oxidisation of the panel material, is generally sensitive to shocks by objects of current use, such as holders for espresso coffee filters, etc.

Such sensitiveness to shocks depends on the fact that the materials of the panels and of the paint work have different lengthening capabilities. Thus, in case of a shock exceeding certain force values, the material of the panels becomes permanently deformed and the paint layer, having lower lengthening and deformation capabilities than the material of the panels, cannot undergo the same permanent deformation: the paint layer becomes therefore detached from the material of the panel thereby exposing the latter, which has a different colour and is no longer protected from oxidisation.

By summarising, the Applicant has realised that the present coffee machine bodies suffer from a number of problems, and that a solution to such problems would be desirable.

### Description of the invention

It is an object of the present invention to provide a solution to the above problems of the prior art.

This object is achieved by the coffee machine body as claimed.

The present invention also concerns a method of manufacturing a coffee machine body.

The claims are integral part of the technical teaching provided herein in respect of the invention.

In accordance with a preferred embodiment, the body comprises a set of panels, at least one of which is externally insulated so as to increase in the whole the thermal efficiency of the coffee machine.

In accordance with a further feature of the present invention, the body panels have an outer surface with a coefficient of thermal conductivity that is at least lower than 0.2 W/(m.K).

In accordance with another feature of the present invention, the body panels have, or at least one such panel has, an outer lagging which is for instance made of natural or synthetic fibres.

### Short description of the figures

The above and other features of the present invention will become apparent from the following description of preferred embodiments thereof, given only by way of non limiting example with reference to the accompanying drawings, in which elements denoted by the same or a similar numerical reference correspond to components having the same or a similar function and construction, and in which:
- Fig. 1 shows a coffee machine having a body made in accordance with the present invention;
- Fig. 2a schematically shows an exemplary behaviour of the thermal dispersion through a prior art body panel; and
- Fig. 2b schematically shows an exemplary behaviour of the thermal dispersion through a body panel according to the invention.

### Description of a preferred embodiment

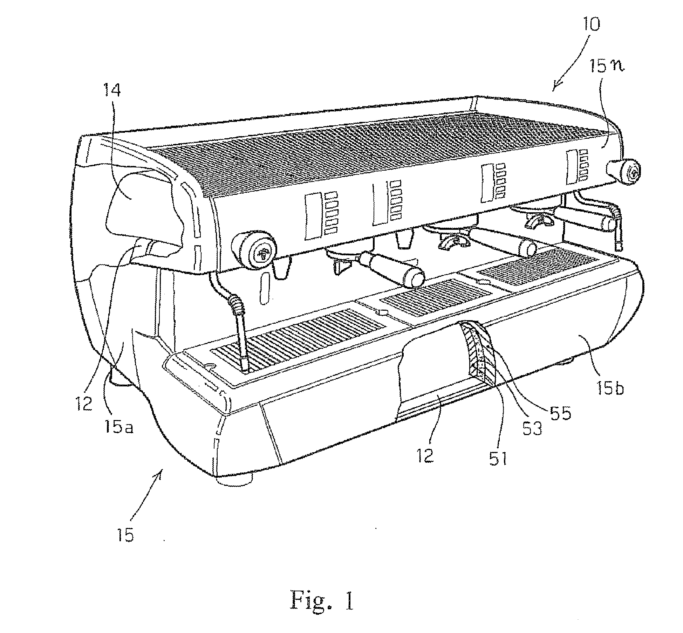

Referring to Fig. 1, a coffee machine 10 in accordance with the present invention comprises at least one frame 12, at least one boiler 14 and at least one body 15.

Frame 12, of known type, is arranged to support boiler 14 inside body 15.

Boiler 14, of known type, is for instance an electrically or gas heated boiler, and it may include an own external insulation or lack it, in particular in case of a gas heated boiler.

Body 15 preferably comprises a plurality of panels 15a, 15b ... 15n that, in accordance with the preferred embodiment of the present invention, are equipped with an own insulation.

More particularly, each or at least one panel 15a, 15b ... 15n has a section comprising:
- an inner surface or internal body element 51 made of one of the materials that preferably are used for building bodies 15 or body panels 15a, 15b ... 15n of such machines 10, for instance aluminium, steel, brass or even plastics;
- an outer surface or insulating element 55 made of an insulating material, for instance PVC, polyester, polyurethane, skin of animal origin; such an outer surface has, for instance, a coefficient of thermal conductivity that preferably is lower than or equal to that of the inner surface, for instance a coefficient lower than 0.2 W/(m.K); in other embodiments, such an outer surface can be possibly covered, on a wall directed towards the inner surface, with a lagging made for instance of a fabric of natural fibres (e.g. cotton) or synthetic fibres (e.g. acrylic fibres); in further embodiments, the outer surface can be directly made of a natural fibre (e.g. cotton) or a synthetic fibre (e.g. acrylic fibre), which fibre has in any case thermal insulation functions;
- an intermediate surface or adhesive element 53 interposed between surface 51 located internally of machine 10 and surface 55 located externally of machine, and arranged to act as an adhesive between surfaces 51 and 55, respectively; such an intermediate surface 53 (adhesive) is for instance a polyurethane adhesive, such as adhesive Macroplast B970 of company Henkel, or a silicon or epoxy adhesive.

The described structure of panels 15a, 15b ... 15n of body 15 enables giving high insulation properties to machine 10.

Depending on the different embodiments, machine 10 can comprise the body insulation only, in particular in case of machines with gas boilers, or both the body and the boiler insulations.

In synthesis, the proposed solution enables equipping with insulation at least coffee machines 10 using boilers heated by free-flame gas. Thus, such a kind of insulation can be a valid alternative in particular when the boiler cannot be insulated or can be insulated only with difficulty.

Of course, in other embodiments, insulation of both the body and the boiler is provided, whereby an extremely high thermal insulating effect can be achieved.

Advantageously, moreover, outer surfaces 55 used in the present invention are characterised by a deformation capability (a characteristic referred to in technical language as resilience or tenacity) much higher than that of inner surface 51 on which they are glued. In case of a shock, therefore, the force being transmitted to the material of inner surface 51, even if it is such that it can cause deformation thereof, is in any case low and the inner surface is protected thanks to the provision of outer surface 55 that, in case of a shock, can become deformed without detaching or breaking.

Body panels 15a, 15b ... 15n or body 15 as described are manufactured as follows:
- in a first step, body elements 51 are manufactured, which have sizes corresponding with those of the machine elements to be manufactured;
- in a second step, adhesive element 53 is applied onto inner body elements 51, of course onto a surface directed towards the outside of machine 10;
- in a third step, insulating element 55 is secured to adhesive element 53.

As it can be readily understood by the skilled in the art, the third step also includes manufacturing insulating elements 55 having sizes corresponding with those of inner elements 51 of the body.

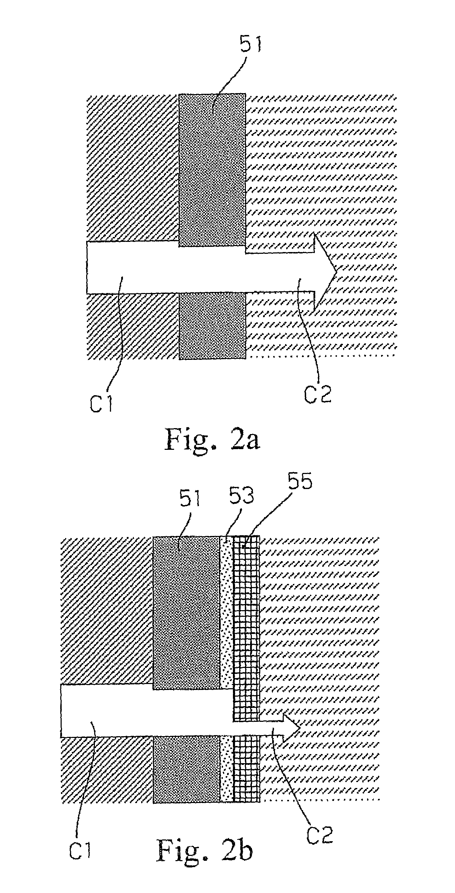

For sake of completeness of the description, a schematic comparison between the amounts of thermal energy dissipated in case of prior art bodies (FIG. 2a) and in case of bodies made in accordance with the present invention (FIG. 2b) is shown. In such Figures, the value of the internal thermal energy is denoted by reference character C1 and the value of the external thermal energy is denoted by reference character C2. The value of C2, as it is immediately apparent, is lower than that of C1, so that it enables limiting the energy amount being dispersed and hence the heat amount required to maintain the temperature of the liquid in the boiler.

Obvious changes and modifications to the above description in respect of size, shape, materials and components, as well as in respect of the details of the illustrated construction and the operating manner are possible without departing from the scope of the invention as defined in the following claims.

## Claims

1. A body of a coffee machine (10) having at least one boiler (14) arranged to keep a liquid at a temperature much higher than ambient temperature, said body (15) comprising a set of panels (15a, 15b ... 15n) arranged to impart a determined shape to the machine (10), **characterised in that** at least one of said panels (15a, 15b ... 15n) includes:
- an inner surface (51) made of a first material having a first coefficient of thermal conductivity; and
- an outer surface (55), which is made of a second material having a second coefficient of thermal conductivity whose value is lower than or equal to the value of the first coefficient of thermal conductivity, and which is secured to an outer wall of said inner surface (51).

2. The body as claimed in claim 1, **characterised in that** said second coefficient of thermal conductivity is at least lower than 0.2 W/(m.K).

3. The body as claimed in any of claims 1 or 2, **characterised in that** said outer surface (55) is made of a material chosen out of the group including:
- PVC;
- polyester;
- polyurethane;
- skin of animal origin;
- fabric made of natural fibres;
- fabric made of synthetic fibres.

4. The body as claimed in any of claims 1 to 3, **characterised in that** said outer surface (55) is secured to an outer wall of said inner surface (51) by means of an adhesive chosen out of the group including:
- polyurethane adhesives;
- silicon adhesives;
- epoxy adhesives.

5. A coffee machine (10) including:
- at least one boiler (14) arranged to keep a liquid at a temperature much higher than ambient temperature;
- at least one frame (12) inside which the boiler is secured;
**characterised by** a body as claimed in any of claims 1 to 4.

6. A method of manufacturing a body of a coffee machine (10) having at least one boiler (14) arranged to keep a liquid at a temperature much higher than ambient temperature, the method comprising the step of:
- manufacturing a set of body elements (51, 15a, 15b ... 15n) having a first coefficient of thermal conductivity and arranged to impart a determined shape to the machine (10), and being **characterised by** the step of:
- securing external insulation means (55) to at least one of said body elements (51, 15a, 15b ... 15n), externally thereof, said means having a second coefficient of thermal conductivity whose value is lower than or equal to the value of the first coefficient of thermal conductivity.
